# EUROPÄISCHE PATENTANMELDUNG

(11) **EP 1 655 065 A1**
(43) Veröffentlichungstag der Anmeldung: **10.05.2006**
(21) Anmeldenummer: 05023805.4
(22) Anmeldetag: 01.11.2005
(51) Int. Cl.: B01D 45/10, B01D 47/06, F24F 3/16

(54) **Vorrichtung zum Behandeln wenigstens eines durch einen Strömungskanal geführten gasförmigen Mediums**

(30) Priorität: 05.11.2004 DE 202004017287 U
(71) Anmelder: Big Dutchman International GmbH, 49377 Vechta (DE)
(72) Erfinder: Meerpohl, Bernd, 49377 Vechta-Calveslage (DE)
(74) Vertreter: Jabbusch, Matthias

(57) **Zusammenfassung**

Bei einer Vorrichtung zum Behandeln wenigstens eines durch einen Strömungskanal geführten gasförmigen Mediums, insbesondere zum Reinigen von aus Gebäuden abgeführter Luft bzw. zum Reinigen von in Gebäude zugeführter Luft, mit wenigstens einer im Strömungskanal angeordneten Flüssigkeitsaustragungseinrichtung und zumindest einer in Strömungsrichtung des Mediums vor der Flüssigkeitsaustragungseinrichtung angeordneten Flüssigkeitsaufnahmeeinrichtung, ist vorgesehen, daß die Flüssigkeitsaufnahmeeinrichtung wenigstens ein Flüssigkeitsauffangelement aufweist, das über einen Abschnitt der Erstreckung des Strömungskanals den gesamten Querschnitt des Strömungskanals abdeckt.

## Beschreibung

Die Erfindung betrifft eine Vorrichtung zum Behandeln wenigstens eines durch einen Strömungskanal geführten gasförmigen Mediums, insbesondere zum Reinigen von aus Gebäuden ausgeführter Luft bzw. zum Reinigen von in Gebäude zugeführter Luft, mit wenigstens einer im Strömungskanal angeordneten Flüssigkeitsaustragungseinrichtung und zumindest einer in Strömungsrichtung des Mediums vor der Flüssigkeitsaustragungseinrichtung angeordneten Flüssigkeitsaufnahmeeinrichtung.

Gasförmige Medien, die insbesondere in Gebäude einzuführen bzw. aus Gebäuden abzuführen sind, werden sehr häufig aus unterschiedlichen Gründen vor- bzw. nachbehandelt. So ist das gasförmige Medium Luft vor dem Einführen in ein Gebäude gegebenenfalls zu erwärmen, zu reinigen oder zu befeuchten. Bei aus Gebäuden abzuführenden gasförmigen Medien, wie Rauchgasen, Küchenabgasen oder Luft, sind diese speziell vor dem Entlassen in die Atmosphäre hinsichtlich energietechnischer Aspekte einer Wärmerückgewinnung zu unterziehen oder aus umwelttechnischen Gesichtspunkten zu reinigen.

Beispielsweise finden in der Tierhaltung derartige Vorrichtungen Anwendungen, wo insbesondere aus dem Inneren von Tierställen abzuführende Luft zu reinigen ist. Diese Luft ist sowohl mit Partikeln aus dem Stallinneren, wie Staub, als auch mit gasförmigen Bestandteilen, beispielsweise in Form von Ammoniak, belastet. Damit diese belastete Luft aus einem Tierstall in die Umgebung abgeführt werden kann, in dessen Nähe gegebenenfalls Anwohner leben, besteht der Anspruch oder die Notwendigkeit, diese Luft von Staubpartikel und/oder gasförmigen Rückständen zu reinigen.

Im Stand der Technik sind für das Reinigen von aus Tierställen abgeführter Luft bzw. zugeführter Luft bereits Vorrichtungen bekannt. Diese Vorrichtungen weisen jeweils wenigstens eine im Strömungskanal angeordnete Flüssigkeitsaustragungseinrichtung und zumindest eine in Strömungsrichtung des Mediums vor der Flüssigkeitsaustragungseinrichtung angeordnete Flüssigkeitsaufnahmeeinrichtung auf. Die zu behandelnde Abluft wird dazu im Reinigungsprozeß durch einen Bereich von Flüssigkeit geführt, wobei ein Auswaschungsprozeß von festen Partikeln bzw. gasförmigen Bestandteilen aus der abgeleiteten Stalluft stattfindet. Die zur Reinigung verwendete Flüssigkeit wird in einem verbreiterten Bereich des Strömungskanals gesammelt und abgeführt. Damit keine Flüssigkeit in Kontakt mit einem in Strömungsrichtung des Mediums vor der Flüssigkeitsaustragungseinrichtung angeordneten Ventilator kommt, ist im verbreiterten Bereich ein Teil des Querschnitts des Strömungskanals mit einer Abdeckeinrichtung, unter der das zu reinigende Medium hervorströmen kann, gegen eindringende Flüssigkeit geschützt.

Das Vorsehen eines verbreiterten Teils des Querschnitts des Strömungskanals führt nachteilig zu einem verbreiterten Abschnitt des Strömungskanals. Dieser verbreiterte Abschnitt kann derartige Ausmaße aufweisen, daß er Probleme bei seinem Einbau z. B. in das Dach eines Tierstalles aufwirft. Insbesondere ist beim Stand der Technik die Schwierigkeit gegeben, einen vorhandenen schlanken Strömungskanal durch einen mit einer Reinigungsvorrichtung ausgerüsteten Strömungskanal zu ersetzen. Oftmals sind die baulichen Gegebenheiten derart eng, z. B. durch die Pfettenabstände des Daches des Tierstalls, daß der verbreiterte Strömungskanal nicht ohne größere Umbaumaßnahmen im Dachbereich des Tierstalles angeordnet werden kann.

Der Erfindung liegt die Aufgabe zugrunde, eine Vorrichtung der eingangs genannten Art zu schaffen, die bei Durchführen einer effektiven Behandlung, insbesondere Reinigung, des gasförmigen Mediums raumsparend anordbar ist.

Diese Aufgabe ist erfindungsgemäß dadurch gelöst, daß die Flüssigkeitsaufnahmeeinrichtung wenigstens ein Flüssigkeitsauffangelement aufweist, das über einen Abschnitt der Erstreckung des Strömungskanals den gesamten Querschnitt des Strömungskanals abdeckt.

Bei der erfindungsgemäßen Vorrichtung ist ein Flüssigkeitsauffangelement besonderer Bauart vorgesehen. Das Flüssigkeitsauffangelement deckt den gesamten Querschnitt des Strömungskanals ab. Diese Abdeckung erfolgt jedoch nicht in einer Ebene des Strömungskanals, so daß der Strömungskanal verschlossen wäre. Vielmehr ist vorgesehen, daß die Abdeckung des Querschnitts des Strömungskanals über einen Abschnitt seiner Erstreckung erfolgt. Damit ist sichergestellt, daß der Querschnitt des Strömungskanals vollständig abgedeckt ist, so daß sämtliche Flüssigkeit aufgefangen werden kann.

Bei der erfindungsgemäßen Vorrichtung ist es nicht erforderlich, den Querschnitt des Strömungskanals zu vergrößem. Durch den Einsatz des erfindungsgemäßen Flüssigkeitsauffangelementes kann der Querschnitt gleich bleiben, so daß ein Strömungskanal mit der erfindungsgemäßen Vorrichtung an der Stelle eines bisherigen Strömungskanals ohne die erfindungsgemäße Vorrichtung angeordnet werden kann. Umbauten oder Erweiterungen z. B. im Dachbereich eines Tierstalles sind vorteilhaft nicht erforderlich.

Das Flüssigkeitsauffangelement ist insbesondere als Wendel ausgebildet, welche um eine etwa auf der Längsmittelachse des Strömungskanals angeordnete Achse verläuft. Mit der Wendel wird ein konstruktiv einfaches Bauteil eingesetzt, um über einen Abschnitt der Erstreckung des Strömungskanals gesehen dessen gesamten Querschnitt abdecken zu können. Ein Abschnitt der Wendel deckt dabei in einer bestimmten Ebene des Strömungskanals einen Teil seines Querschnitts ab. Der restliche überwiegende Teil dieser Querschnittsfläche ist frei, so daß das abzuführende gasförmige Medium bzw. das zuzuführende gasförmige Medium relativ frei und ohne Überwinden größerer Strömungswiderstände das Flüssigkeitsauffangelement passieren kann. Die in Strömungsrichtung des Mediums nach dem Flüssigkeitsauffangelement ausgetragene Flüssigkeit wird nachfolgend auf die Oberfläche der Wendel geführt. Durch die gleichmäßige Gestaltung der Wendeloberfläche wird ein unbeschleunigtes Abführen der aufgefangenen Flüssigkeit umgesetzt, weshalb die Flüssigkeit beim Abführen in Kontakt mit der Wendeloberfläche verbleibt. Durch die auf der Oberfläche der Wendel abgeführte Flüssigkeit erfolgt vorteilhaft eine Vorreinigung des über der Oberfläche entgegengesetzt entlang geführten Mediums.

In einer weiteren bevorzugten Ausgestaltung der Erfindung ist das eingesetzte Flüssigkeitsauffangelement eine mehrgängige Wendel. Dies hat den Vorteil, daß der Abschnitt der Erstreckung der eingesetzten Wendel über den Strömungskanal kürzer ausgebildet ist, weshalb eine kompaktere Bauweise der gesamten Vorrichtung umgesetzt werden kann. Insbesondere wird eine zweigängige Wendel eingesetzt, wodurch sich die Länge gegenüber einer eingängigen Wendel um die Hälfte verkürzt.

Des weiteren wird, um den gesamten Querschnitt des Strömungskanals zu verdecken, ein erstes parallel zur Erstreckung des Strömungskanals ausgerichtetes Teilstück des Flüssigkeitsauffangelementes zu einem zweiten parallel zur Erstreckung des Strömungskanals ausgerichteten Teilstück des Flüssigkeitsauffangelementes etwa um wenigstens 180° verwunden. Bevorzugt findet beim Einsatz einer zweigängigen Wendel eine Verwindung von 220° Anwendung. Dadurch soll sichergestellt werden, daß selbst Tropfen die nicht auf direktem Wege auf das Flüssigkeitsauffangelement herunterfallen, sondern auf einem Strömungspolster des gasförmigen Mediums abwärts getragen werden, letztlich doch mit der Oberfläche des Flüssigkeitsauffangelementes in Kontakt kommen.

Um die Vorreinigung des abgeführten gasförmigen Mediums noch zu verbessern und gleichzeitig eine günstige Wasserverteilung auf der Oberfläche des Flüssigkeitsauffangelementes umzusetzen, sind auf der Oberfläche der Wendel parallel zum Umfang des Strömungskanals und in einem vorbestimmten Abstand zur Innenseite des Strömungskanals ein oder mehrere Flüssigkeitsleitelemente anordbar. Durch die eingesetzten Flüssigkeitsleitelemente kann das Bestreben der Flüssigkeit, nach außen hin abzulaufen, verhindert werden. Die Flüssigkeitsleitelemente sind z. B. stegförmig ausgebildet und teilen somit das Flüssigkeitsauffangelement in einzelne Ablaufbereiche.

Nach einer nächsten Weiterbildung der Erfindung ist vorgesehen, daß der Flüssigkeitsaufnahmeeinrichtung auf der der Flüssigkeitsaustragungseinrichtung abgekehrten Seite zumindest eine erste Flüssigkeitsableiteinrichtung zugeordnet ist. Mit Hilfe der ersten Flüssigkeitsableiteinrichtung wird die gesamte Flüssigkeit aufgenommen, welche dem Flüssigkeitsauffangelement direkt zugeleitet wird oder mit diesem als herunterfallende Tropfen in Kontakt gerät.

Des weiteren ist der Flüssigkeitsaufnahmeeinrichtung auf der der Flüssigkeitsaustragungseinrichtung zugewandten Seite zumindest eine zweite Flüssigkeitsableiteinrichtung zugeordnet. Die zweite Flüssigkeitsableiteinrichtung ist in Strömungsrichtung des Mediums betrachtet hinter dem Flüssigkeitsauffangelement angeordnet. Beim Austragen der Flüssigkeit werden etwa 90 % der Flüssigkeit direkt auf die Innenseite des Strömungskanals abgeleitet. Um diese nicht einfach an der Innenseite des Strömungskanals herunterlaufen zu lassen, werden diese mit Hilfe der zweiten Flüssigkeitsableiteinrichtung aufgefangen.

Um das Auffangen der Flüssigkeit zu gewährleisten, ist jede Füssigkeitsableiteinrichtung als nach oben hin geöffnete Flüssigkeitsrinne ausgebildet. Die Flüssigkeitsrinne weist ein U-förmiges Profil auf und ist an der Innenseite des Strömungskanals angeordnet. Das verwendete U - Profil ist vorzugsweise derart ausgebildet, daß die äußere Seite des Profils glatt mit der Innenseite des Strömungskanals abschließt und der nach innen hineinragende Teil zum einen eine geringe Versperrung des Querschnitts ausmacht. Die Flüssigkeitsrinne kann dabei einen z. B. zu ihrem Boden spitz zulaufenden Querschnitt aufweisen, so daß sie dem gegen diesen Boden strömenden Medium keinen zu großen Strömungswiderstand entgegensetzt.

Die somit umlaufende Flüssigkeitsrinne ist dem gesamten Umfang des Strömungskanals zugeordnet. Sie weist bevorzugt einen durch den Mittelpunkt des Strömungskanals verlaufenden Rinnenabschnitt auf. Der Rinnenabschnitt ist über seine gesamte Länge als strömungsgünstiges Profil ausgebildet. An den Enden ist jeder Rinnenabschnitt flüssigkeitsleitend mit der Flüssigkeitsrinne verbunden.

In einer weiteren bevorzugten Ausgestaltung der Erfindung ist die in Strömungsrichtung des Mediums hinter dem Flüssigkeitsauffangelement angeordnete zweite Flüssigkeitsableiteinrichtung mit Auslässen zum Aufbringen der ausgetragenen Flüssigkeit auf das Flüssigkeitsauffangelement versehen. Speziell im durch den Mittelpunkt des Strömungskanals verlaufenden Rinnenabschnitt sind eine Vielzahl von Auslässen in vorbestimmten Abständen angeordnet. Die eingebrachten Auslässe dienen in Kombination mit den Flüssigkeitsleitelementen optimal zur Verteilung der Flüssigkeit auf der Oberfläche des Flüssigkeitsauffangelementes und somit zu einer günstigen Vorreinigung des gasförmigen Mediums.

Um die in den Flüssigkeitsrinnen aufgenommene Flüssigkeit sowohl auf dem Flüssigkeitsauffangelement zu verteilen als auch von diesem aufzunehmen, sind die durch den Mittelpunkt des Strömungskanals verlaufenden Rinnenabschnitte der Flüssigkeitsrinnen zu dem oberen und dem unteren parallel zur Erstreckung des Strömungskanals ausgerichteten Teilstücks des Flüssigkeitsauffangelementes fluchtend angeordnet.

Um die in der ersten Flüssigkeitsableiteinrichtung aufgefangene Flüssigkeit abzuleiten, ist die Flüssigkeitsableiteinrichtung flüssigkeitsleitend mit einer Flüssigkeitsleitung verbunden. Die Flüssigkeitsleitung wiederum mündet in einem Auffangbehälter, wo die Flüssigkeit gesammelt und für eine erneute Verwendung bereitgestellt wird. Die in dem Auffangbehälter gesammelte Flüssigkeit, kann sowohl einem kontinuierlichen Reinigungsprozeß unterzogen werden, wo die festen Bestandteile und/oder die nun in der Flüssigkeit gelösten chemischen Rückstände über spezielle Filtereinrichtungen ausgeschieden bzw. gebunden werden. In einem anderen Anwendungsfall verbleibt die eingesetzte Flüssigkeit solange im Einsatz, bis bestimmte Sättigungsraten bzw. Verschmutzungsgrade überschritten sind und dann ein kompletter Austausch der Flüssigkeit vorgenommen wird.

Die Flüssigkeitsaustragungseinrichtung weist vorzugsweise wenigstens einen im Strömungskanal angeordneten Flüssigkeitsverteiler auf. Mit Hilfe des Flüssigkeitsverteilers wird die über einen Bereich der Flüssigkeitsaustragung zugeführte Flüssigkeit auf einem Abschnitt des Strömungskanals über den Querschnitt des Strömungskanals verteilt. Dadurch soll gewährleistet werden, daß das abgeführte gasförmige Medium kontinuierlich mit der Flüssigkeit in Berührung kommt und gleichzeitig der Reinigungsvorgang vorgenommen wird. Durch die auf dem gesamten Querschnitt des Strömungskanals verteilte Flüssigkeit sollen insbesondere die festen Staubpartikel aufgenommen bzw. die gasförmigen Rückstände in der abgeführten Luft gebunden werden. Bei der Flüssigkeitsaustragung gelangen etwa 90 % des flüssigen Mediums direkt mit der Innenseite des Strömungskanals in Verbindung, laufen darauf herunter und werden durch die zweite Flüssigkeitsableiteinrichtung aufgenommen, um von dort auf das Flüssigkeitsauffangelement verteilt zu werden. Etwa 10 % der ausgetragenen Flüssigkeit gelangen direkt nach dem Austragen unmittelbar auf das Flüssigkeitsauffangelement.

Damit eine ausreichende Verteilung der ausgetragenen Flüssigkeit im Strömungskanal umgesetzt werden kann, sind wenigstens zwei Flüssigkeitsverteiler in einer Ebene des Strömungskanals angeordnet.

In einer weiteren bevorzugten Ausgestaltung der Erfindung sind mehrere Flüssigkeitsverteiler auf unterschiedlichen Ebenen des Strömungskanals angeordnet, wobei zwei Flüssigkeitsverteiler einer Ebene mit zwei weiteren Flüssigkeitsverteilern einer benachbarten Ebene um eine bestimmte Gradzahl verschwenkt sind. Durch die Staffelung der Flüssigkeitsverteiler wird eine besonders effektive Form der Reinigung umgesetzt, da die nicht auf der untersten Ebene der Flüssigkeitsverteiler in der Flüssigkeit aufgenommenen Staubpartikel bzw. gasförmige Rückstände des abgeführten Mediums, mit sehr großer Wahrscheinlichkeit bereits in der zweiten oder einer dritten Ebene gebunden sind. Weiterhin verbessernd wirkt der Umstand, daß die Flüssigkeitsverteiler auf den unterschiedlichen Ebenen um eine vorbestimmte Gradzahl verschwenkt sind, wodurch eine ausgewogene Flüssigkeitsverteilung bezogen auf den Querschnitt erfolgt.

Insbesondere sind die Flüssigkeitsverteiler als Düsen ausgebildet, und weisen bevorzugt eine Abstrahlungsrichtung von 360° und einen Abstrahlungswinkel von etwa 130° auf. Durch die Ausführung des Flüssigkeitsverteiler in Form einer Düse, ist eine sehr feine Verteilung der ausgetragenen Flüssigkeit gewährleistet. Durch die Verdüsung entstehen oberhalb und unterhalb des Hauptabstrahlungswinkels Bereiche eines Flüssigkeitsschleiers, wodurch sich die Reinigungsleistung zusätzlich verbessert. Weiterhin wird durch die spezielle Abstrahlungsrichtung und dem vorbestimmten Abstrahlungswinkel in jeder Ebene der Flüssigkeitsverteiler durch die Flüssigkeit ein geschlossener Vorgang gebildet, was zu einer gleichmäßigen Reinigung über dem Querschnitt des Strömungskanals führt.

Zusätzlich weist die Flüssigkeitsaustragungseinrichtung eine Tauchpumpe auf, die in dem Auffangbehälter angeordnet ist. Mit Hilfe der Tauchpumpe wird die zur Reinigung des abgeführten gasförmigen Mediums benötigte Flüssigkeit aus dem Auffangbehälter der Flüssigkeitsaustragungseinrichtung zugeführt. Somit entsteht ein geschlossener Flüssigkeitskreislauf, wodurch der Verbrauch der Reinigungsflüssigkeit und somit die Zufuhr von frischer Flüssigkeit sehr stark verringert wird.

In weiterer bevorzugter Ausgestaltung der Erfindung ist vorgesehen, daß in Strömungsrichtung des Mediums bevorzugt vor der Flüssigkeitsaufnahmeeinrichtung ein Ventilator, der zur Erzeugung von definierten Strömungsverhältnissen im Strömungskanal dient, angeordnet ist. Die erfindungsgemäße Vorrichtung verhindert dabei, daß sich die mit dem gasförmigen Medium in Kontakt geratende Feuchtigkeit auf dem Ventilator und dessen Motor niederschlagen kann. Dadurch wird das Ausfallrisiko des Ventilators minimiert.

Der Ventilator ist in Strömungsrichtung des Mediums bevorzugt vor der z. B. Reinigungsvorrichtung für das Medium eingesetzt. Insbesondere bei einer vertikalen Ausrichtung des Strömungskanals ist der Ventilator dann in einem räumlichen Bereich anordbar, in dem er z. B. Reparaturarbeiten einfach zugänglich ist. Ist der Strömungskanal beispielsweise in das Dach eines Tierstalls eingebaut, kann sich der Ventilator im Bereich einer Raumzwischendecke befinden.

Der Strömungskanal ist vorzugsweise vertikal ausgerichtet, wodurch sich eine platzsparende Form umsetzen läßt. Ein weiterer Vorteil der vertikalen Anordnung des Strömungskanals entsteht beim Ausfallen des Ventilators. Ist die Temperatur im Inneren des Tierstalls höher als die Temperatur der Umgebungsluft, wird bei Ausfall des Ventilators durch die entstehende Thermik eine Zwangsbelüftung umgesetzt.

Weiterhin besteht die Möglichkeit, in Strömungsrichtung des Mediums nach der Flüssigkeitsaustragungseinrichtung einen Tropfenabscheider im Strömungskanal anzuordnen. Die Aufgabe des Tropfenabscheiders besteht hauptsächlich darin, kleinere durch das abgeführte gasförmige Medium mitgerissene Flüssigkeitstropfen aufzufangen, die sich dann zur größeren Tropfen vereinigen können, um in den Strömungskanal entgegen der Strömungsrichtung hinabzufallen.

Weiterhin kann das Flüssigkeitsauffangelement aus einem transparenten Werkstoff gefertigt sein.

Des weiteren sind die Flüssigkeitsaufnahmeeinrichtung und das Flüssigkeitsauffangelement in einen vorhandenen Strömungskanal einsetzbar, wodurch bereits bestehende Reinigungsanlagen durch eine geringe konstruktive Umgestaltung erneut werden können.

Ein Ausführungsbeispiel der Erfindung, aus dem sich weitere erfinderische Merkmale ergeben, ist in der Zeichnung dargestellt. Es zeigen:
- Fig.1:: eine schematische Ansicht einer in einen Strömungskanal eingesetzten Vorrichtung zum Behandeln eines gasförmigen Mediums im Teilschnitt;
- Fig. 2:: die durch Einkreisung in Fig. 1 gekennzeichneten Einzelheit II in vergrößertem Maßstab; und
- Fig. 3:: die durch Einkreisung in Fig. 1 gekennzeichnete Einzelheit III in vergrößertem Maßstab.

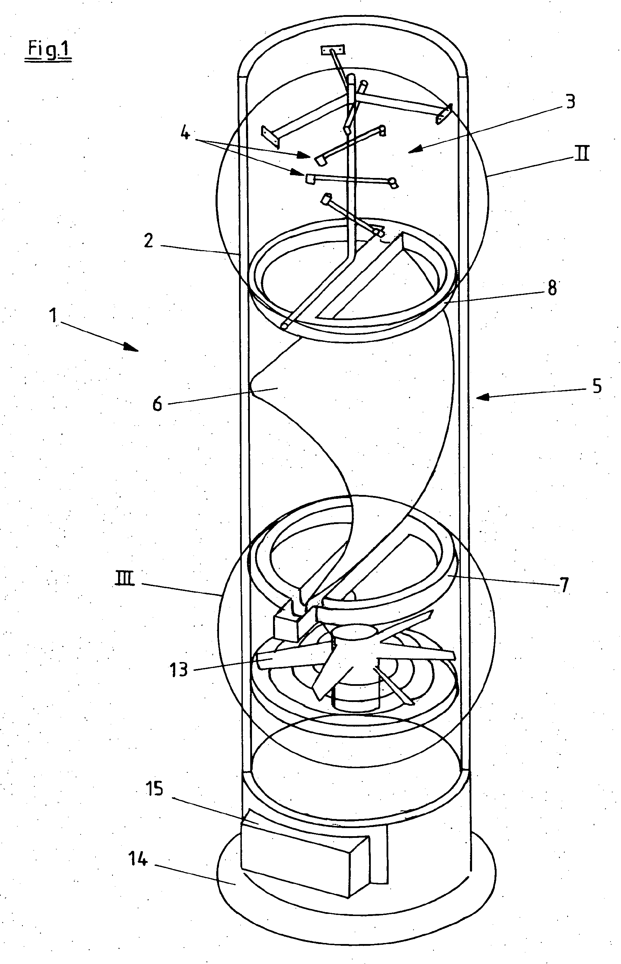

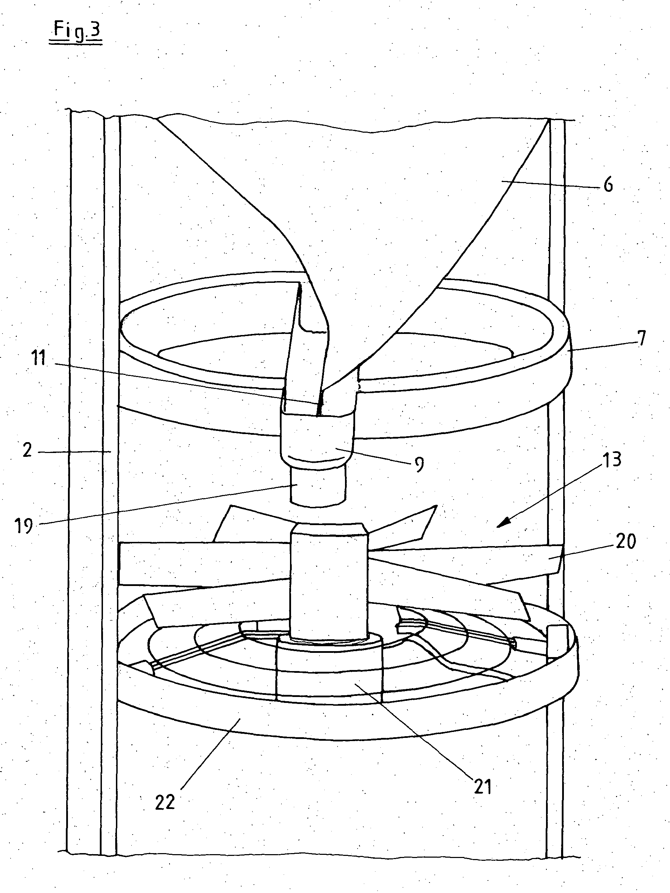

Die Vorrichtung 1 in Fig. 1 dient insbesondere zum Behandeln eines gasförmigen Mediums in einem Strömungskanal 2. Die Vorrichtung 1 weist in einem oberen Bereich eine Flüssigkeitsaustragungseinrichtung 3 auf, die sich hauptsächlich aus auf mehreren Ebenen angeordneten Flüssigkeitsverteilern 4 zusammensetzt. Unterhalb der Flüssigkeitsaustragungseinrichtung 3 ist im Strömungskanal 2 eine Flüssigkeitsaufnahmeeinrichtung 5 angeordnet. Die Flüssigkeitsaufnahmeeinrichtung 5 ist insbesondere aus einem Flüssigkeitsauffangelement 6, einer erster Flüssigkeitableiteinrichtung 7 und einer zweiten Flüssigkeitsableiteinrichtung 8 ausgebildet. Die Flüssigkeitsableiteinrichtungen 7, 8 weisen Rinnenabschnitte 9, 10 auf, die zu einem ersten Teilstück 11 (Fig. 3) und zu einem zweiten Teilstück des Flüssigkeitsauffangelementes 6 fluchtend angeordnet sind.

Das Flüssigkeitsauffangelement 6 ist als Wendel ausgebildet. Mit dieser Wendel gelingt bei einer Beibehaltung des Querschnittes des Strömungskanals 2 eine vollständige Abdeckung des Innenquerschnittes des Strömungskanals 2 über eine definierte Strecke dieses Strömungskanals 2. Die Wendel dient dazu, aus den Flüssigkeitsverteilern ausgetretene Flüssigkeit vollständig aufzunehmen, so daß sie nicht in den Bereich unterhalb der ersten Flüssigkeitsableiteinrichtung 7 gelangen kann. Mit der Wendel wird dabei die Flüssigkeit dieser Flüssigkeitsableiteinrichtung 7 definiert zugeführt.

Unterhalb der Flüssigkeitsaufnahmeeinrichtung 5 ist im Strömungskanal 2 ein Ventilator 13 angeordnet, der über eine Ansaugöffnung 14 das abzuführende gasförmige Medium unter Herstellung definierter Strömungsverhältnisse durch den Strömungskanal 2 bewegt. Der Vorrichtung 1 ist eine Steuerungseinrichtung 15 zugeordnet, mit deren Hilfe eine bestimmte Anzahl von Arbeitspunkten mit jeweils definierten Strömungsverhältnissen und den dazu benötigten Massenströmen der Flüssigkeit angefahren werden können.

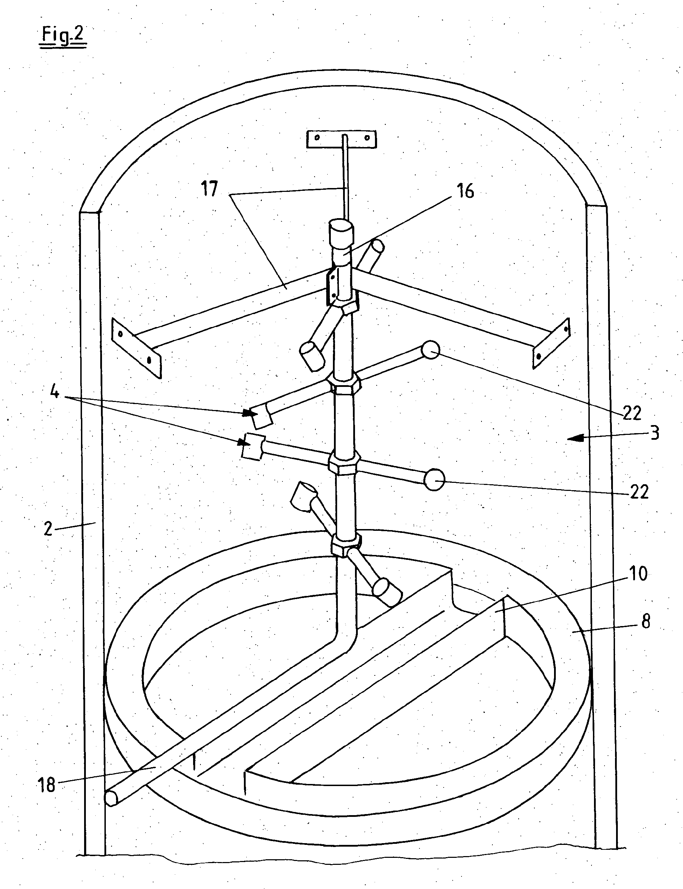

Fig. 2 verdeutlicht den Aufbau und die Funktionsweise der Flüssigkeitsaustragungseinrichtung 3, die im oberen Bereich der Vorrichtung 1 im Strömungskanal 2 angeordnet. Die paarweise angeordneten Flüssigkeitsverteiler 4, sind auf vier verschiedenen Ebenen des Strömungskanals 2 angeordnet und über ein gemeinsames Standrohr 16 miteinander verbunden. Die Flüssigkeitsverteiler 4 tragen an freien Enden Düsen 22. Der Flüssigkeitsaustragungseinrichtung 3 wird über eine Flüssigkeitszuleitung 18, die für den Reinigungsprozeß auszutragende Flüssigkeit zugeführt. Die Flüssigkeitszuleitung 18 ist im Querschnitt des Strömungskanals 2 derart angeordnet, daß sie parallel zum Rinnenabschnitt 10 der Flüssigkeitsableiteinrichtung 8 verläuft. Somit wird durch die Flüssigkeitszuleitung 18 kein zusätzlicher Widerstand im Strömungsquerschnitt erzeugt. In jedem Flüssigkeitsverteiler 4 sind zwei Düsen an den freien Enden eines Profilstückes angeordnet. Die Profilstücke der einander benachbarten Flüssigkeitsverteiler 4 sind dabei auf dem vertikal ausgerichteten Abschnitt der Flüssigkeitszuleitung 18 zueinander um einige Gradzahlen versetzt. Eine gegenseitige Behinderung des Flüssigkeitsaustrittes aus den Flüssigkeitsverteilern 4 wird damit ausgeschlossen.

In Fig. 3 ist der Übergang zwischen dem ersten parallel zur Erstreckung des Strömungskanals 2 ausgerichteten Teilstück 11 des Flüssigkeitsauffangelementes 6 und dem Rinnenabschnitt der ersten Flüssigkeitsableiteinrichtung 7 gezeigt. Um die in der ersten Flüssigkeitsableiteinrichtung 7 aufgefangene Flüssigkeit ableiten zu können, ist an einem Rinnenabschnitt 9 ein im Bereich des Umfangs des Strömungskanals angeordneten Stutzen 19 zum Anschluß einer Flüssigkeitsleitung angeordnet, die die Flüssigkeit in einen darunterliegenden Auffangbehälter abführt. Unterhalb der ersten Flüssigkeitsableiteinrichtung 7 weist der Strömungskanal 2 einen vertikal ausgerichteten Axialventilator 13 auf. Der Axialventilator 13 sorgt im Strömungskanal 2 für definierte Strömungsverhältnisse und setzt sich insbesondere aus einem Axiallüfterrad 20, einem Motor 21 und einem Schutzgitter 22 zusammen. Der Ventilator 13 ist über das Schutzgitter 22 mit der Innenseite des Strömungskanals 2 verbunden.

## Patentansprüche

1. Vorrichtung zum Behandeln wenigstens eines durch einen Strömungskanal geführten gasförmigen Mediums, insbesondere zum Reinigen von aus Gebäuden abgeführter Luft bzw. zum Reinigen von in Gebäude zugeführter Luft, mit wenigstens einer im Strömungskanal angeordneten Flüssigkeitsaustragungseinrichtung und zumindest einer in Strömungsrichtung des Mediums vor der Flüssigkeitsaustragungseinrichtung angeordneten Flüssigkeitsaufnahmeeinrichtung,
**dadurch gekennzeichnet,**
**daß** die Flüssigkeitsaufnahmeeinrichtung (5) wenigstens ein Flüssigkeitsauffangelement (6) aufweist, das über einen Abschnitt der Erstreckung des Strömungskanals den gesamten Querschnitt des Strömungskanals (2) abdeckt.

2. Vorrichtung nach Anspruch 1, **dadurch gekennzeichnet, daß** das Flüssigkeitsauffangelement (6) als Wendel ausgebildet ist, welche um eine in etwa auf der Längsmittelachse des Strömungskanals (2) angeordneten Achse verläuft.

3. Vorrichtung nach Anspruch 2, **dadurch gekennzeichnet, daß** die Wendel eine mehrgängige Wendel ist.

4. Vorrichtung nach einem der Ansprüche 1 bis 3, **dadurch gekennzeichnet, daß** das Flüssigkeitsauffangelement (6) ein erstes parallel zur Erstreckung des Strömungskanal (2) ausgerichtetes Teilstück (11) aufweist, das zu einem zweiten parallel zur Erstreckung des Strömungskanals ausgerichteten Teilstück (12) des Flüssigkeitsauffangelementes (6) etwa um wenigstens 180° verwunden ist.

5. Vorrichtung nach einem der Ansprüche 2 bis 4, **dadurch gekennzeichnet, daß** auf der Oberfläche der Wendel parallel zum Umfang des Strömungskanals (2) und einem vorbestimmten Abstand zur Innenseite des Strömungskanals (2) ein oder mehrere Flüssigkeitsleitelemente angeordnet sind.

6. Vorrichtung nach einem der Ansprüche 1 bis 5, **dadurch gekennzeichnet, daß** der Flüssigkeitsaufnahmeeinrichtung (5) auf der der Flüssigkeitsaustragungseinrichtung (3) abgekehrten Seite zumindest eine erste Flüssigkeitsableiteinrichtung (7) zugeordnet ist.

7. Vorrichtung nach Anspruch 6, **dadurch gekennzeichnet, daß** der Flüssigkeitsaufnahmeeinrichtung (5) auf der der Flüssigkeitsaustragungseinrichtung (3) zugewandten Seite zumindest eine zweite Flüssigkeitsableiteinrichtung (8) zugeordnet ist.

8. Vorrichtung nach Anspruch 6 oder 7, **dadurch gekennzeichnet, daß** jede Flüssigkeitsableiteinrichtung (7,8) eine Flüssigkeitsrinne ist, die an der Innenseite des Strömungskanals (2) angeordnet ist.

9. Vorrichtung nach Anspruch 8, **dadurch gekennzeichnet, daß** die Flüssigkeitsrinne dem gesamten Umfang des Strömungskanals (2) zugeordnet ist.

10. Vorrichtung nach Anspruch 8 oder 9, **dadurch gekennzeichnet, daß** jede Flüssigkeitsrinne einen durch den Mittelpunkt des Strömungskanals (2) verlaufenden Rinnenabschnitt (9,10) hat.

11. Vorrichtung nach einem der Ansprüche 6 bis 10, **dadurch gekennzeichnet, daß** die erste Flüssigkeitsableiteinrichtung (7) mit einer Flüssigkeitsleitung flüssigkeitsleitend verbunden ist.

12. Vorrichtung nach Anspruch 11, **dadurch gekennzeichnet, daß** die Flüssigkeitsleitung in einem Auffangbehälter mündet.

13. Vorrichtung nach einem der Ansprüche 7 bis 12, **dadurch gekennzeichnet, daß** die zweite Flüssigkeitsableiteinrichtung (8) mit Auslässen zum Aufbringen der ausgetragenen Flüssigkeit auf das Flüssigkeitsauffangelement (6) versehen ist.

14. Vorrichtung nach einem der Ansprüche 10 bis 13, **dadurch gekennzeichnet, daß** die durch den Mittelpunkt des Strömungskanals (2) verlaufenden Rinnenabschnitte (9, 10) der Flüssigkeitsrinnen zu dem oberen und dem unteren parallel zur Erstreckung des Strömungskanals (2) ausgerichteten Teilstück (11, 12) des Flüssigkeitsauffangelementes (6) fluchtend angeordnet sind.

15. Vorrichtung nach einem der Ansprüche 1 bis 14, **dadurch gekennzeichnet, daß** die Flüssigkeitsaustragungseinrichtung (3) wenigstens einen im Strömungskanal (2) angeordneten Flüssigkeitsverteiler (4) aufweist.

16. Vorrichtung nach Anspruch 15, **dadurch gekennzeichnet, daß** wenigstens zwei Flüssigkeitsverteiler (4) in einer Ebene des Strömungskanals (2) angeordnet sind.

17. Vorrichtung nach Anspruch 15 oder 16, **dadurch gekennzeichnet, daß** mehrere Flüssigkeitsverteiler (4) auf unterschiedlichen Ebenen des Strömungskanals (2) angeordnet sind, wobei zwei Flüssigkeitsverteiler (4) einer Ebene mit zwei weiteren Flüssigkeitsverteilern (4) einer benachbarten Ebene um eine bestimmte Gradzahl verschwenkt sind.

18. Vorrichtung nach einem der Ansprüche 15 bis 17, **dadurch gekennzeichnet, daß** die Flüssigkeitsverteiler (4) als Düsen (22) ausgebildet sind.

19. Vorrichtung nach Anspruch 18, **dadurch gekennzeichnet, daß** die Düsen (22) eine Abstrahlungsrichtung von 360° und einen Abstrahlungswinkel von etwa 130° aufweisen.

20. Vorrichtung nach Anspruch 19, **dadurch gekennzeichnet, daß** die Flüssigkeitsaustragungseinrichtung (3) eine Tauchpumpe aufweist, die in dem Auffangbehälter angeordnet ist.

21. Vorrichtung nach einem der Ansprüche 1 bis 20, **dadurch gekennzeichnet, daß** in Strömungsrichtung des Mediums vor der Flüssigkeitsaufnahmeeinrichtung (5) ein Ventilator (13) angeordnet ist.

22. Vorrichtung nach einem der Ansprüche 1 bis 21, **dadurch gekennzeichnet, daß** der Strömungskanal (2) vertikal ausgerichtet ist.

23. Vorrichtung nach einem der Ansprüche 1 bis 24, **dadurch gekennzeichnet, daß** in Strömungsrichtung des Mediums nach der Flüssigkeitsaustragungseinrichtung (3) ein Tropfenabscheider angeordnet ist.

24. Vorrichtung nach einem der Ansprüche 1 bis 25, **dadurch gekennzeichnet, daß** das Flüssigkeitsauffangelement (6) aus einem transparenten Werkstoff gefertigt ist.

25. Vorrichtung nach einem der Ansprüche 1 bis 22, **dadurch gekennzeichnet, daß** die Flüssigkeitsaufnahmeeinrichtung (5) und das Flüssigkeitsauffangelement (6) in einen vorhandenen Strömungskanal (2) einsetzbar sind.
